# EUROPEAN PATENT APPLICATION

(11) **EP 1 270 509 A2**
(43) Date of publication of application: **02.01.2003**
(21) Application number: 02013592.7
(22) Date of filing: 20.06.2002
(51) Int. Cl.: C01B 3/38, F28D 7/16, B01J 4/02, B01J 8/00

(54) **Apparatus, systems and methods for controlling the steam-carbon ratio for a hydrocarbon reformer**

(30) Priority: 22.06.2001 US 888059
(71) Applicant: Ballard Generation Systems Inc., Burnaby, B.C. V5A 2X2 (CA)
(72) Inventor: Epp, Mark A., Langley, BC V1M 1Y7 (CA); Eiche, Michael, Richmond, BC V7E 1H3 (CA)
(74) Representative: Beyer, Andreas, Dr.

(57) **Abstract**

Systems and methods for accurately calculating a steam-carbon ratio in a reformer or the like are shown and described. In one embodiment, a control valve regulates the amount of water entering the process side of a heat exchanger upstream of the reformer. A steam/process outlet directs steam from the heat exchanger to the reformer. A level control device operates the control valve to maintain the water at a constant level. A meter upstream of the heat exchanger measures the amount of water entering the heat exchanger. By maintaining a constant water level in the process portion of the heat exchanger, the reading on the meter equates to the amount of steam directed from the heat exchanger to the reformer or vaporizer. With this reading, the steam-carbon ratio at the reformer can be accurately counted. In another embodiment of the present invention, a process gas inlet incorporates an elongated body extending at least partially through the process portion of the heat exchanger. Openings spaced apart along the length of the body distribute the process gas along the length of the heat exchanger. In still another embodiment of the invention, a plurality of dividers is spaced apart along a width of the process portion of the heat exchanger. The dividers are positioned to receive the process gas as it rises from the process gas inlet, and to disperse the process gas along the width of the heat exchanger.

## Description

### TECHNICAL FIELD

The invention generally relates to heat exchangers. More particularly, the invention relates to heat exchangers and the like for providing steam and/or hydrocarbon gas to a reformer or vaporizer, and to systems and methods for facilitating an accurate calculation of the steam-carbon ratio in the reformer.

### BACKGROUND OF THE INVENTION

A reformer converts natural gas or other hydrocarbons into hydrogen, and thus is often used in a petrochemical facility or power plant upstream from a piece of equipment that uses hydrogen, such as a fuel cell. In a typical reformer, a hydrocarbon such as natural gas is combined with water in the presence of a catalyst at high temperatures to form hydrogen gas and carbon dioxide. The water is typically in the form of steam. To further increase the efficiency of the reformer, the hydrocarbon and/or the steam are typically pre-treated. For example, steam and/or natural gas are sometimes pre-heated in a heat exchanger, recuperator or similar piece of equipment.

For ease of understanding, all relevant types of pre-treatment equipment are collectively referred to herein as "heat exchangers," although the inventor appreciates that other equipment, such as recuperators, may be substitutable for or combinable with heat exchangers without deviating from the spirit of the invention. Similarly, all relevant types of process equipment are collectively referred to herein as "reformers," although the inventor appreciates that other equipment, such as vaporizers, may be substitutable for or combinable with reformers without deviating from the spirit of the invention.

A critical factor in the optimal functioning of a reformer is the ratio between the steam and the hydrocarbon, referred to as the steam-to-carbon ratio ("s/c ratio"). It has been suggested that maintaining a relatively high s/c ratio can prevent mechanical as well as economic problems during the life of the plant. For example, because a high s/c ratio favors the products in the reforming reaction equilibrium, maintaining a high s/c ratio lowers the amount of un-reacted methane, or methane slip, out of the secondary reformer and increases the production of hydrogen.

Also, a high s/c ratio inhibits the occurrence of carbon-forming side reactions in the primary reformer that result in carbon deposits on the catalyst. Carbon deposition increases the system's resistance to gas flow in the primary reformer tubes and may impair catalyst activity. This impairment lowers the rate of the reforming reaction and can cause local overheating or "hot bands" in reformer tubes that result in premature tube wall failure.

Still further, a high s/c ratio provides the necessary steam for the shift conversion of carbon monoxide and reduces the risk of carburization damage to the tube material.

At the same time, maintaining the s/c ratio too high can be inefficient financially. Creating more steam than necessary is costly, as steam generation and superheating require significant fuel resources.

Suffice it to say that maintaining the s/c ratio within an optimal range is important in operating a reformer. Unfortunately, it is often difficult to accurately calculate the s/c ratio in the reformer. Consequently, it is also difficult to control the s/c ratio.

### SUMMARY OF THE INVENTION

The present invention is directed toward a heat exchanger, heater, recuperator, boiler or the like for pre-heating steam and/or hydrocarbon gas for a reformer or other article of pre-treatment equipment, such as a vaporizer. Embodiments of the present invention facilitate the calculation of a steam-carbon ratio in the reformer by generating an accurate reading of the amount of steam entering the reformer.

One embodiment of the invention incorporates a vessel body having isolated process and heating fluid portions. A heating fluid inlet and outlet direct heating fluid to and from the heating fluid portion of the vessel body, and a process liquid inlet and outlet direct process liquid to and from the process portion of the vessel body. A control valve regulates the amount of process liquid entering the process portion of the vessel body. A process gas inlet directs process gas to the process portion of the vessel body at a location below a desired process liquid level such that process gas entering the process portion of the vessel body bubbles through at least some of the process liquid. A process vapor outlet directs process vapor from the process portion of the vessel body to a subsequent piece of equipment. A level control device operates the control valve to maintain the process liquid at the desired level.

In another embodiment of the present invention, the process gas inlet incorporates an elongated body extending at least partially through the process portion of the heat exchanger. Openings spaced apart from each other along the elongated body distribute the process gas along the length of the heat exchanger.

In still another embodiment of the invention, a plurality of dividers is spaced apart along a width of the process portion of the heat exchanger. The dividers are positioned to receive the process gas as it rises from the process gas inlet, and to disperse the process gas along the width of the heat exchanger. It is envisioned that the elongated body and the plurality of dividers can be used in combination to disperse the process gas along both the length and the width of the process portion of the heat exchanger.

In another embodiment, the heat exchanger is configured to maintain the process liquid at a constant level. A meter upstream of the heat exchanger measures the amount of water entering the heat exchanger. By maintaining a constant liquid level in the process portion of the heat exchanger, the reading on the meter can be used to calculate the amount of steam directed to the reformer or vaporizer. With this reading, the steam-carbon ratio at the reformer can be accurately calculated and, as a result, closely controlled.

The invention also is directed to methods of performing the above functions, as well as to equivalent embodiments of the same:

### BRIEF DESCRIPTION OF THE DRAWINGS

Figure 1 is a flow diagram schematically illustrating a system for facilitating the accurate calculation of a steam-carbon ratio in a reformer according to an embodiment of the present invention.
Figure 2 is an isometric view of a flooded heat exchanger and a level controller of the system illustrated in Figure 1.
Figure 3 is a sectional elevation view of the flooded heat exchanger of Figure 2, viewed along Section 3-3.
Figure 4 is a sectional end view of the flooded heat exchanger of Figure 2, viewed along Section 4-4.

### DETAILED DESCRIPTION OF THE ILLUSTRATED EMBODIMENTS

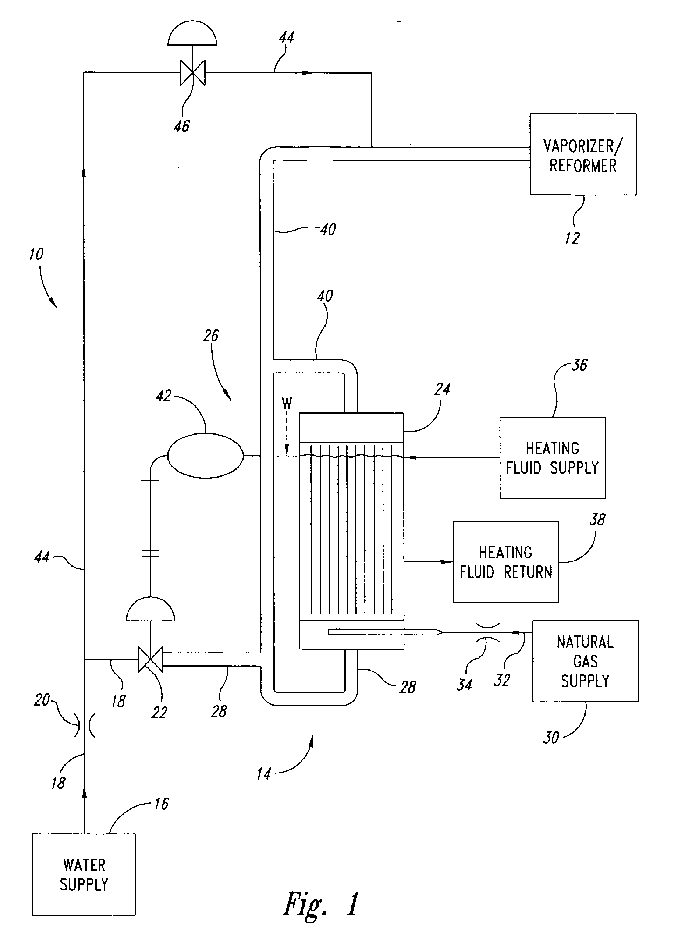

The present detailed description is generally directed toward systems, apparatus and methods for facilitating the accurate calculation of a steam-carbon ("s/c") ratio in a reformer or the like, and for improving the performance of a flooded heater. Embodiments of the present invention may facilitate the control of the s/c ratio in the reformer, and may otherwise allow the reformer to be run more efficiently and/or with fewer emissions than systems of the prior art. Certain details of the invention, and the best mode known to the inventors for operating the invention, are contained in Figures 1-4 and in the present specification and claims. One of ordinary skill in the art, however, will appreciate that certain details could be added, modified or omitted from the specific embodiments illustrated and described without deviating from the spirit of the present invention. Consequently, the scope of the invention is only limited by the claims below.

Figure 1 schematically illustrates a system 10 for facilitating an accurate calculation of the s/c ratio in a reformer 12 fed by a heat exchange assembly 14, according to one particular embodiment of the present invention. In the illustrated embodiment, a water supply 16, such as a tank, provides water on demand to the system 10. A water supply line 18 routes water from the water supply 16, through a water meter 20, to a first flow control valve 22. The water meter 20 measures and registers the amount of water entering the system 10, and the first flow control valve 22 controls the amount of water that enters the heat exchange assembly 14.

The heat exchange assembly 14 incorporates a heat exchanger 24 and a level control assembly 26. In the illustrated embodiment, the heat exchanger 24 is in the form of a flooded heat exchanger. The water entering the heat exchange assembly 14 from the first flow control valve 22 follows a process liquid intake line 28 to a process side of the heat exchanger 24. Natural gas from a natural gas supply 30 follows a process gas inlet line 32, also to the process side of the heat exchanger 24. In the illustrated embodiment, a gas meter 34 measures and registers the amount of natural gas entering the heat exchanger 24. A heating fluid supply 36 directs heated gas or liquid to a heating fluid side of the heat exchanger 24, and the heated gas or liquid is removed from the heat exchanger by a heating fluid return 38. The heating gas or liquid on the heating fluid side of the heat exchanger 24 increases the temperature of the water and natural gas in the process side of the heat exchanger. The heated water (in the form of steam) and natural gas leave the heat exchanger 24 by a process vapor outlet line 40. The process vapor outlet line 40 directs the heated steam and natural gas to the reformer 12.

The level control assembly 26 is located between the process liquid intake line 28 and the process vapor outlet line 40. The level control assembly 26 incorporates a level sensor 42 that senses the level of the water in the process side of the heat exchanger 24. The level sensor 42 is coupled to the first flow control valve 22. In the illustrated embodiment, the level control assembly 26 is configured to maintain the water in the process side of the heat exchanger 24 at a desired water level W. If the water drops below the desired water level W, the level control assembly 26 opens the first flow control valve 22 to increase the flow rate of the water until the water rises to the desired water level W. Likewise, if the water rises above the desired water level W, the level control assembly 26 closes the first flow control valve 22 to reduce the flow rate of the water until the water lowers to the desired water level W. By optimizing the level control assembly 26, the heat exchange assembly 14 can be configured such that the water remains at or close to the desired water level W.

A water bypass line 44 is routed between the water supply line 18 and the process vapor outlet line 40. A second flow control valve 46 is positioned in the water bypass line 44 to control the flow of water between the water supply 16 and the reformer 12. The system of the illustrated embodiment is configured such that additional water can be routed to the reformer 12 without unnecessarily changing the water level in the heat exchanger.

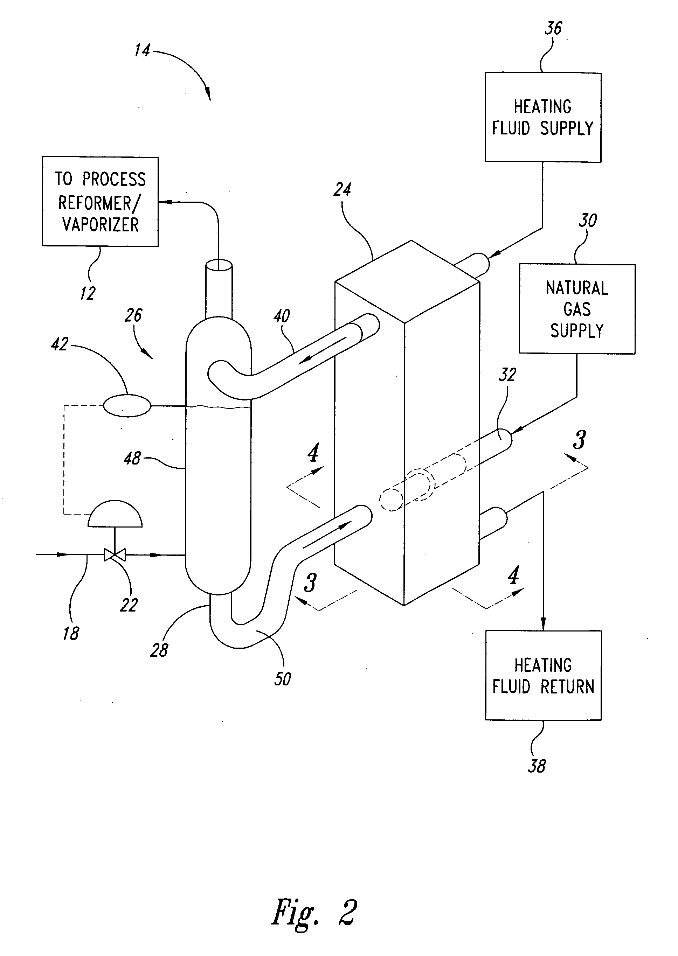

Figure 2 further illustrates the heat exchange assembly 14 and level control assembly 26 according to this particular embodiment of the present invention. The level control assembly 26 incorporates a downcomer pipe 48 extending vertically along the length of the heat exchanger 24. In the illustrated embodiment, the downcomer pipe 48 is oriented vertically and extends along the entire heat exchanger 24. The downcomer pipe, however, could also be angled, and could instead be longer or shorter than the heat exchanger 24, to accommodate a particular system configuration.

The water supply line 18 injects water exiting the first flow control valve 22 into the downcomer pipe 48, and the process liquid intake line 28 routes the water from the downcomer pipe to the heat exchanger 24. The process liquid intake line 28 is coupled to the downcomer pipe 48 at a location lower than the desired water level W, but could also be lower than a minimum water level. A trap 50 or other low point in the process liquid intake line 28 prevents process gas from escaping from the heat exchanger 24 through the process liquid intake line.

The process vapor outlet line 40 routes a mixture of heated steam and natural gas to the downcomer pipe 48 at a location above the desired water level W, but could also be located above a maximum water level. The process vapor outlet line 40 then continues, exiting from the top of the downcomer pipe 48 and routing the heated steam and natural gas to the reformer 12. Consequently, an upper portion of the downcomer pipe 48 is filled with the heated vapor mixture and a lower portion is filled with water. The downcomer pipe 48 therefore can be used to measure the level of the water in the heat exchanger 24. The level sensor 42 is coupled to the downcomer pipe 48 at a height selected to measure water levels near the desired water level W, but could also be designed to measure a range of water levels extending from the minimum water level to the maximum water level, or beyond.

It is appreciated that the configuration described above is only one possible configuration for the downcomer pipe 48 and lines extending to and from the downcomer pipe. Other configurations would also fall within the spirit of the invention. For example, one or both of the process liquid inlet line 28 and process vapor outlet line 40 could be routed past the downcomer pipe 48 and the downcomer pipe instead connected thereto by one or more branches extending from the respective header. One of ordinary skill in the art would know of other possible alternate configurations.

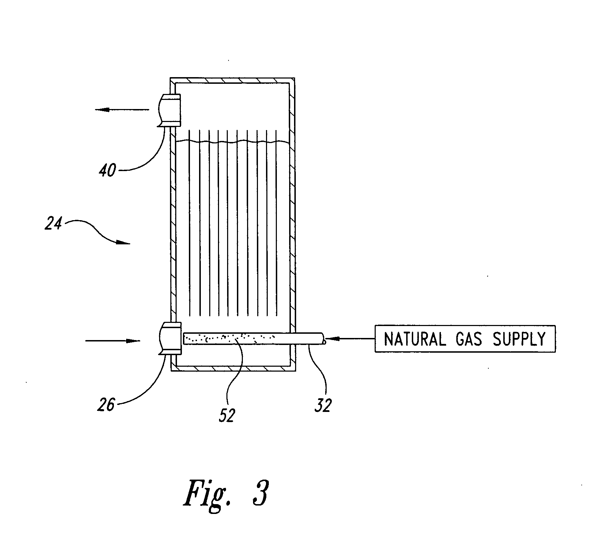

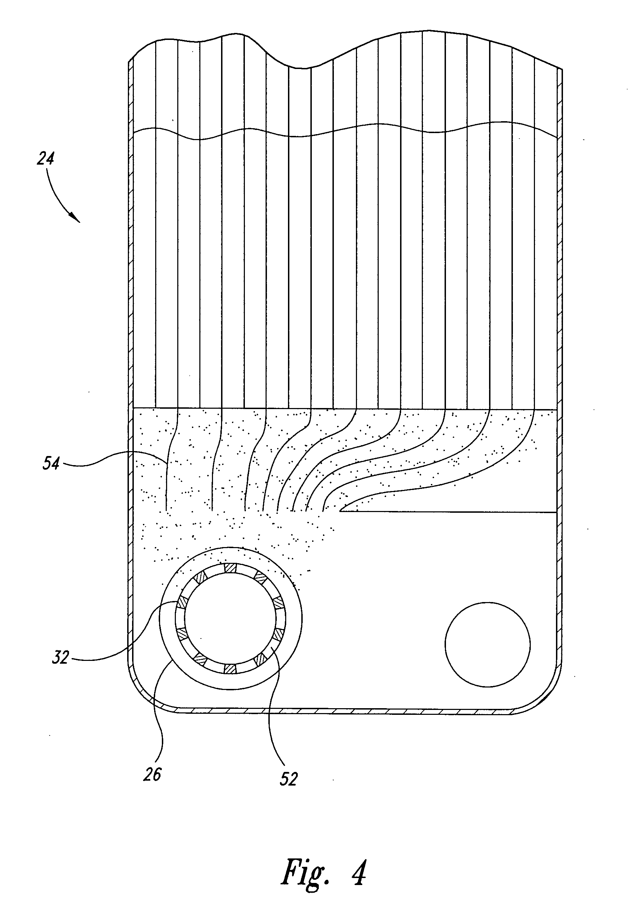

Figures 3 and 4 further illustrate the heat exchanger 24 of the present invention. In the illustrated embodiment, the process gas inlet line 32 extends through the heat exchanger 24. As best illustrated in Figure 3, a plurality of apertures 52 in the process gas inlet line 32 distributes bubbles of natural gas throughout the length of the process side of the heat exchanger 24. The apertures in the process gas inlet line 32, can be formed by various processes or by using various structures. For example, the apertures 52 can be formed by drilling holes in a section of pipe, or by incorporating an open-celled foam-like structure into the inlet line.

The process gas inlet line 32 is aligned with the process liquid inlet line 26 to allow natural gas to be introduced into the water as soon as the water enters the heat exchanger 24. It is envisioned, however, that one or both of the inlets could be positioned and/or aligned differently without deviating from the scope of the present invention.

As best illustrated in Figure 4, a plurality of fins 54 is distributed across the width of the process portion of the heat exchanger 24. The lower portion of the fins 54 converge and terminate above the process gas inlet line 32 to collect the bubbles of natural gas escaping through the apertures 52 in the inlet. The fins 54 extend upward and diverge until the upper portion of the fins 54 are distributed across the entire width of the process portion of the heat exchanger 24.

It is envisioned that other configurations of heat exchangers 24 can be utilized without deviating from the spirit of the present invention. For example, embodiments of the heat exchanger 24 can be fabricated with only one of the apertures 52 and fins 54 to distribute the natural gas along only one dimension of the heat exchanger. Further, multiple process gas inlet lines 32 can be incorporated into the system, in which case, groups of fins 54 could be configured to collect natural gas bubbling from each of the inlets, collectively distributing natural gas across the entire width of the heat exchanger 24. One of ordinary skill in the art would likely appreciate other alternate configurations of the present invention.

The present invention has a number of advantages over systems, apparatus and methods of the prior art. For example, the system of the present invention can allow the operator to determine the exact amount of water entering the reformer, regardless of pressure and temperature fluctuations in the heat exchanger. Because the level sensor is external to the heat exchanger, it is less susceptible to minor fluctuations in water level caused by boiling off or condensation. The level control system can thus maintain the water level in the heat exchanger at a more constant level.

Further, because the system can maintain the water level in the heat exchanger constant, the system can facilitate the accurate calculation of the s/c ratio in the reformer. By knowing the exact amount of water that enters the reformer, the operator can accurately calculate the s/c ratio. The operator can likewise precisely control the s/c ratio, possibly increasing efficiency of and decreasing the harmful emissions from the reformer.

Still further, by introducing the natural gas into the heat exchanger in the form of small bubbles, the area of contact between the water and the natural gas can be maximized, increasing the efficiency of the humidification of the natural gas and, as a result, the efficiency of the heat exchanger. Likewise, by distributing the bubbles of natural gas across the length and/or width of the heat exchanger, the efficiency of the heat exchanger can also be significantly increased.

From the foregoing it will be appreciated that, although specific embodiments of the invention have been shown and described herein for purposes of illustration, various modifications may be made without deviating from the spirit and scope of the invention. Accordingly, the invention is not limited except as by the appended claims.

## Claims

1. A flooded heat exchanger comprising:
a vessel body having a process portion and a heating fluid portion isolated from the process portion, the vessel body being configured to facilitate heat transfer between the process portion and the heating fluid portion;
a heating fluid inlet configured to direct heating fluid to the heating fluid portion of the vessel body;
a heating fluid outlet configured to remove heating fluid from the heating fluid portion of the vessel body;
a process liquid inlet configured to direct process liquid to the process portion of the vessel body;
a control valve configured to control an amount of process liquid entering the process portion of the vessel body;
a process gas inlet configured to direct process gas to the process portion of the vessel body, the process gas inlet being located below a desired process liquid level in the process portion of the vessel body such that process gas entering the process portion of the vessel body bubbles through at least some of the process liquid;
a process vapor outlet configured to remove process vapor from the process portion of the vessel body, the process vapor outlet being located above the desired process liquid level; and
a level control device fluidly coupled to the process portion of the vessel body, a first portion of the level control device communicating with an upper location on the vessel body above the desired process liquid level and a second portion of the level control device communicating with a lower location on the vessel body below the desired process liquid level, the level control device operating the control valve to maintain an actual process liquid level at least close to the desired process liquid level.

2. The flooded heat exchanger of claim 1 wherein the process gas inlet has a length extending at least partially through the process portion of the vessel body, and wherein the process gas inlet comprises a plurality of openings spaced apart from each other to disperse the process gas escaping therefrom along the length.

3. The flooded heat exchanger of claim 1 wherein the process gas inlet has a length extending at least partially through the process portion of the vessel body, and wherein the process gas inlet comprises a plurality of pores spaced apart from each other to create small bubbles of process gas and to disperse the bubbles of process gas along the length.

4. The flooded heat exchanger of claim 1, further comprising a plurality of dividers positioned above the process gas inlet, the dividers configured to disperse the process gas throughout the process portion of the heat exchanger.

5. The flooded heat exchanger of claim 1 wherein the process gas inlet has a length extending at least partially through the process portion of the vessel body, and wherein the process gas inlet comprises a plurality of openings spaced apart from each other to disperse the process gas escaping therefrom along the length, and further comprising a plurality of dividers positioned above the process gas inlet, the dividers configured to disperse the process gas throughout a width of the process portion of the heat exchanger.

6. The flooded heat exchanger of claim 1 wherein the process liquid inlet comprises a trap configured to prevent the process gas from traveling through the process liquid inlet.

7. The flooded heat exchanger of claim 1 wherein the level control device operates the control valve to maintain the actual process liquid level at a constant level.

8. A system for facilitating the calculation of a steam-carbon ratio in a reformer or vaporizer, comprising:
a flooded heat exchanger configured to provide steam to the reformer or vaporizer, the flooded heat exchanger having a heat exchanger body with a process portion and a heating fluid portion isolated from the process portion, the heat exchanger body being configured to facilitate heat transfer between the process portion and the heating fluid portion;
a heating fluid inlet configured to direct heating fluid to the heating fluid portion of the heat exchanger body;
a heating fluid outlet configured to remove heating fluid from the heating fluid portion of the heat exchanger body;
a process liquid inlet configured to direct water to the process portion of the heat exchanger body;
a control valve configured to control an amount of water entering the process portion of the heat exchanger body;
a water meter configured to calculate the amount of water entering the process portion of the heat exchanger body;
a process vapor outlet configured to remove steam from the process portion of the heat exchanger body, the process vapor outlet being located above a water level in the process portion of the heat exchanger body; and
a level control device coupled to the process portion of the heat exchanger body, the level control device being operable with the control valve to maintain the water level in the process portion of the heat exchanger body at a constant level such that a reading on the water meter provides the amount of steam generated by the heat exchanger to facilitate calculation of the steam-carbon ratio.

9. The system of claim 8 wherein a first portion of the level control device communicates with an upper location on the heat exchanger body above the water level and a second portion of the level control device communicates with a lower location on the heat exchanger body below the water level.

10. The system of claim 8, further comprising a process gas inlet configured to direct a hydrocarbon gas to the process portion of the heat exchanger body, the process gas inlet being located below the water level in the process portion of the heat exchanger body such that the hydrocarbon gas entering the process portion of the heat exchanger body bubbles through at least some of the water.

11. The system of claim 8, further comprising a heat exchanger bypass line configured to route water to the reformer or vaporizer without the water passing through the heat exchanger.

12. A method for determining the amount of steam entering a reformer or vaporizer to facilitate calculation of a steam-carbon ratio in the reformer or vaporizer, the method comprising:
providing a heat exchanger configured to provide steam to the reformer or vaporizer;
providing a water meter configured to register an amount of water entering the heat exchanger;
maintaining a water level in the heat exchanger constant during a period of operation;
reading a register on the water meter to determine the amount of water entering the heat exchanger during the period of operation; and
calculating the steam-carbon ratio in the reformer or vaporizer based on the reading from the water meter, knowing that an amount of steam generated by the heat exchanger during the period of operation is equal to the amount of water provided to the heat exchanger during the same period.

13. The method of claim 12, further comprising an external level indicator coupled to the heat exchanger, and wherein maintaining the water level in the heat exchanger comprises measuring a liquid level in the external level indicator and adjusting a flow of water to the heat exchanger.

14. The method of claim 12, further comprising introducing hydrocarbon gas into the heat exchanger, and bubbling the hydrocarbon gas through the water to absorb water vapor from the water and carry the water vapor to the reformer.
